# FASCICULE DE BREVET EUROPEEN

(11) **EP 1 543 080 B1**
(45) Date de publication et mention de la délivrance du brevet: **03.03.2010**
(21) Numéro de dépôt: 03773827.5
(22) Date de dépôt: 25.08.2003
(51) Int. Cl.: C09D 5/44, C25D 13/08

(54) **PROCEDE DE GARNITURE D UNE SURFACE PAR UN FILM ORGANIQUE**
VERFAHREN ZUM BELEGEN EINER OBERFLÄCHE MIT EINEM ORGANISCHEN FILM
METHOD OF COATING A SURFACE WITH AN ORGANIC FILM

(30) Priorité: 26.08.2002 FR 0210568
(43) Date de publication de la demande: 22.06.2005
(73) Titulaire: COMMISSARIAT A L'ENERGIE ATOMIQUE, 75015 Paris (FR)
(72) Inventeur: BUREAU, Christophe, F-92150 Suresnes (FR); DENIAU, Guy, F-78610 Auffargis (FR); PALACIN, Serge, F-78180 Montigny le Bretonneux (FR)
(74) Mandataire: Poulin, Gérard
(86) Numéro de dépôt international: PCT/FR2003/050035
(87) Numéro de publication internationale: WO 2004/018573

(56) Documents cités:
- EP-A- 1 227 135
- FR-A- 2 798 146
- US-A- 5 527 434
- US-A- 5 961 810
- DATABASE WPI Section Ch, Week 199314 Derwent Publications Ltd., London, GB; Class A14, AN 1993-113134 XP002240289 & JP 05 051795 A (NISSAN MOTOR CO LTD), 2 mars 1993 (1993-03-02)

## Description

### Domaine technique

La présente invention concerne le domaine des revêtements organiques de surface, lesdits revêtements étant sous la forme de films organiques. Elle se rapporte en particulier à un procédé permettant de réaliser par réaction électro-initiée la garniture d'une surface par un film organique d'épaisseur uniforme, même à une échelle inférieure ou égale au micromètre, sur une surface conductrice ou semi-conductrice.

L'obtention de garnitures, ou revêtements organiques d'épaisseur uniforme, en particulier à une échelle inférieure au micromètre, constitue un enjeu important dans de nombreuses applications, notamment lorsque ce revêtement agit comme un revêtement protecteur, par exemple anti-corrosion, biocompatible, etc., comme un revêtement isolant ou conducteur électrique, un revêtement absorbeur optique, un revêtement sur des biopuces ou des capteurs chimiques, etc. où les propriétés que confère ce revêtement sont quasiment directement reliées à son épaisseur. Toute inhomogénéité locale d'épaisseur est alors la cause d'un défaut local dans la performance recherchée.

### Art antérieur

On connaît des procédés de dépôt de garnitures organiques qui peuvent fonctionner sur à peu près tous les types de surface, et donc en particulier sur les surfaces conductrices et semi-conductrices de l'électricité. On citera par exemple les procédés de dépôt de films par voies physiques ou chimiques en phase vapeur (CVD, PVD...etc), ainsi que les procédés par centrifugation ou spin-coating.

La PVD et la CVD sont toutefois tributaires de l'existence de précurseurs adéquats pour obtenir la vapeur réactive permettant d'effectuer le dépôt. Seuls certains types de revêtements sont donc disponibles, ce qui bride l'optimisation des fonctions que le revêtement doit remplir. On observe, de plus, en micro-électronique notamment, que la PVD est sensible à la topologie tridimensionnelle de la surface, et notamment aux effets de pointe, en particulier sur les structurations ayant des ratios d'aspect, profondeur sur largeur, élevés. Cette sensibilité est probablement la traduction de la plus grande réactivité de zones géométriques saillantes, et conduit à des inhomogénéités d'épaisseur d'autant plus marquées que les structurations sont fines (< 0,13 µm).

Des inhomogénéités d'épaisseur des films sont également observées lorsque la PVD ou la CVD doivent être utilisées en combinaison avec un dispositif de masquage, à cause des effets de bord du masque. Enfin, le contrôle d'épaisseur de dépôts organiques par CVD reste aujourd'hui insuffisant pour des revêtements ultra-minces, dans le domaine industriel, notamment pour des épaisseurs inférieures à quelques microns, ce qui rend cette gamme d'épaisseurs encore inaccessible.

Des effets de bord sont également observés pour le dépôt par centrifugation (« spin coating »). Ce procédé permet une bonne homogénéité d'épaisseurs tant que le flux du liquide déposé sous l'effet de la force centrifuge reste laminaire. Ce n'est en général pas le cas sur les bords des surfaces ni à l'aplomb de pavages rugueux, qui sont à l'origine de turbulences dans l'écoulement du flux (« spirales d'Eckman »). De plus, il a été observé que, pour des films ultra-minces, l'évaporation du solvant pendant l'application du procédé augmente - de façon souvent localement inhomogène - la viscosité du fluide et conduit à des inhomogénéités d'épaisseur. En outre, les dispositifs mettant en oeuvre ces procédés sont complexes car ils nécessitent un contrôle des pressions de vapeur saturante, de température et même d'humidité.

Des procédés de recuit par solvant de revêtements organiques déposés par « spin-coating » ont été développés pour pallier les inconvénients précités. Ils nécessitent cependant une étape supplémentaire de coût significatif.

Différents procédés basés sur l'électrochimie ont été développés pour obtenir des revêtements organiques d'épaisseur ajustable. Contrairement aux précédents, ces procédés exploitent directement les propriétés électriques des surfaces conductrices et semi-conductrices, et ne sont applicables que sur ces surfaces. On sait par exemple, de longue date, réaliser l'éléctro-déposition de polymères chargés sur des surfaces conductrices ou semi-conductrices de l'électricité. On sait aussi réaliser, à titre d'exemple, l'électro-déposition des métaux, ou encore l'électro-polymérisation des monomères précurseurs de polymères conducteurs tels que le pyrrole, l'aniline, le thiophène, l'EDOT, etc. Ces réactions ont en commun qu'il s'agit de réactions électro-suivies, c'est-à-dire qu'elles ne se poursuivent que du fait du passage du courant électrique dans le circuit électrique dont la surface à traiter est une des électrodes. Ces réactions sont à considérer notamment par opposition aux réactions électro-initiées, où seule une étape (étape initiale) est électrochimique, et génératrice d'une chimie couplée indépendante du courant.

Ces procédés présentent cependant deux handicaps notoires, qui gênent lourdement leur utilisation dans le domaine de la micro-électronique, et plus généralement dans l'élaboration de revêtements organiques sur des surfaces fabriquées à partir de matériaux semi-conducteurs :
- L'avancement des réactions électro-suivies reste relié au maintien du potentiel électrique et/ou du courant dans la cellule d'électrolyse pendant toute la croissance du film. L'épaisseur du revêtement obtenu est donc fonction de la charge intégrale du courant passée dans le circuit.
- Ces réactions électro-suivies ne permettent pas de contrôler les uniformités d'épaisseurs du film à quelques dizaines de nanomètres près sur des surfaces de plusieurs centimètres carrés, comme c'est le cas par exemple en micro-électronique. En effet si l'on considère deux zones conductrices ou semi-conductrices de l'électricité reliées électriquement en série via une impédance, alors tout potentiel électrique appliqué à l'une n'est pas transmis à l'identique sur l'autre, malgré le lien entre ces deux surfaces : une chute ohmique existe entre les deux zones. Cette chute ohmique implique que les potentiels apparents vus par les deux surfaces sont différents, et donc que les courants électriques qui les traverse sont différents, à aires égales. Pour des temps d'électrolyses égaux, les charges passées dans chacune des zones seront différentes, et les épaisseurs de film obtenues à l'aide d'une réaction électro-suivie seront également différentes.

En résumé, les réactions électro-suivies donnent des revêtements avant tout fidèles à la topologie des chutes ohmiques - liées au procédé et au dispositif pour le mettre en oeuvre - et non à la topologie géométrique de la surface initiale.

Le document US 5 527 434 A, décrit un procédé de préparation d'une couche de polymère conductrice par électropolymérisation d'un ou plusieurs monomères précurseurs dans une cellule électrochimique contenant une anode et une cathode et un procédé dans lequel la différence de potentiel entre les deux électrodes varie de façon cyclique entre une valeur A fixée préalablement et une valeur B accrue progressivement jusqu'à une valeur seuil pour laquelle l'électropolymérisation est initiée.

Aussi, aucun procédé basé sur des réactions électro-suivies n'est appliqué aujourd'hui pour obtenir des revêtements organiques lorsqu'il est nécessaire de pouvoir contrôler les uniformités d'épaisseurs à quelques dizaines de nanomètres près sur des surfaces de plusieurs centimètres carrés, comme c'est le cas par exemple en microélectronique.

Etant donné la difficulté actuelle de réaliser des surfaces ne présentant aucune inhomogénéité de résistance de surface, ainsi que des cellules électrochimiques parfaites sans inhomogénéités de distribution de courant, il existe un réel besoin de disposer de procédés de dépôt de films organiques qui nivellent les effets de chute ohmique entre un point et un autre d'une surface donnée.

Ce besoin est notamment important dans tous les domaines d'application où l'on a recours à des matériaux semi-conducteurs, par exemple en micro-électronique, dans les microsystèmes tels que les capteurs, les micromachines, etc., puisque ces matériaux sont précisément caractérisés par le fait que leur surface n'est pas une équipotentielle, et qu'une chute ohmique existe toujours en deux points quelconques distants sur cette surface.

Ainsi, on constate que l'efficacité des procédés aujourd'hui disponibles pour effectuer le dépôt d'un revêtement organique sur une surface conductrice ou semi-conductrice avec un bon contrôle de l'épaisseur, sont étroitement liés à la topographie de la surface, par exemple à la rugosité pour les procédés non électrochimiques, et à la topographie de chutes ohmiques pour les procédés électrochimiques.

### Exposé de l'invention

La présente invention permet de répondre aux nombreux problèmes de l'art antérieur exposés ci-dessus, en fournissant un procédé permettant d'obtenir, rapidement et de manière reproductible, des films organiques d'épaisseur uniforme, même à des épaisseurs de film inférieures à 1 µm, sur une surface d'un support, quelque soit sa forme, et donc en particulier quelque soit sa topographie.

Le procédé de la présente invention est un procédé de garniture d'une surface simple ou complexe, conductrice ou semi-conductrice de l'électricité, par un film organique à partir d'au moins un précurseur dudit film organique, **caractérisé en ce que** la garniture de la surface par le film organique est réalisée par greffage électro-initié dudit, au moins un, précurseur sur ladite surface par application sur cette surface d'au moins un balayage de potentiels effectué de manière à ce qu'en tout point de ladite surface le potentiel maximal de chaque balayage de potentiels, en valeur absolue et par rapport à une électrode de référence, est supérieur ou égal à la valeur de potentiel minimal de balayage (V_{bloc}) à partir de laquelle les courbes d'un graphique exprimant la quantité de précurseur électro-greffé sur une surface identique à ladite surface en fonction du nombre de balayages de potentiel sont toutes superposées et indépendantes de ce potentiel V_{bloc}.

La quantité de précurseur électro-greffé peut être évaluée par diverses mesures : quantité réelle, en mol/cm² (concentration surfacique), ou encore - à taux de greffage maximal - épaisseur du film organique résultant. Selon la nature chimique des précurseurs et des films organiques finalement obtenus, ces mesures ne sont pas toutes aussi simples à réaliser les unes que les autres selon les cas, et l'on pourra choisir la plus aisée, par exemple la mesure d'épaisseur, par profilométrie, ellipsométrie, microscopie à force atomique ou microscopie à effet tunnel.

Selon un mode particulier de réalisation de la présente invention, le film organique peut être un film polymère organique, et le monomère un monomère électro-actif précurseur dudit film polymère organique. Dans ce mode particulier de réalisation, la réaction électro-initiée est alors bien entendu une polymérisation électro-initiée dudit, au moins un, monomère précurseur. Dans ce mode de réalisation, le graphique peut être un graphique exprimant l'épaisseur dudit film polymère organique en fonction du nombre de balayages de potentiel.

De manière générale, les réactions de greffage électro-initiées de la présente invention, appelées ci-dessous réactions électro-initiées, sont à considérer par opposition aux réactions électro-suivies, qui sont des réactions initiées électrochimiquement, mais dont l'avancement reste ensuite relié au maintien du potentiel électrique et/ou du courant dans la cellule d'électrolyse. En d'autres termes, il s'agit de réactions électrochimiques génératrices d'une chimie couplée contenant au moins une réaction électrochimique. Comme décrit ci-dessus, l'épaisseur du revêtement obtenu par réaction électro-suivie est fonction de la charge intégrale du courant passée dans le circuit, donc de la chute ohmique locale.

Le procédé de la présente invention n'est pas tributaire de ces paramètres. En effet, seule l'étape d'électroinitiation, appelée aussi électro-amorçage, est en relation avec le courant électrique. Cette initiation correspond en particulier à une électro-activation du précurseur du film organique, conduisant par exemple à la formation d'espèces oxydées ou réduites, à partir du ou des précurseur(s), donc ayant subi un transfert électronique, et qui ne sont ensuite la source que d'espèces moléculaires ou macro-moléculaires ne présentant pas d'électro-activité significative dans les gammes de potentiel d'électrode utilisées.

Par exemple, l'obtention de films polymères greffés selon le mode particulier de réalisation du procédé de la présente invention, par greffage de monomères électro-activés sur surfaces conductrices ou semi-conductrices, procède grâce à une électro-initiation de la réaction de polymérisation à partir de la surface, suivie d'une croissance des chaînes, monomère par monomère. La croissance des chaînes greffées s'effectue par polymérisation purement chimique, c'est-à-dire indépendamment de la polarisation de la surface conductrice qui a donné lieu au greffage. Il apparaît donc que le protocole de potentiel joue un rôle distinct de celui de la composition de la solution. Une fois la croissance des chaînes entamée, c'est la composition de la solution qui gère la croissance du film : les chaînes auront toutes la même longueur puisque la solution en regard de la surface est la même pour toutes les chaînes en croissance. C'est donc en réglant le taux de greffage sur la surface qu'on règle l'épaisseur du film organique greffé sur la surface, et que cette épaisseur est la même partout lorsque ce taux de greffage est maximum.

Ainsi, selon l'invention, en faisant une série de revêtements sur des surfaces successives toutes rigoureusement identiques, et en imposant des conditions opératoires adéquates identiques d'une surface à une surface suivante, pour avoir - à chaque fois - un taux de greffage maximal sur chaque surface, par utilisation de potentiels supérieurs à V_{bloc}, on peut changer les épaisseurs d'une surface à la surface suivante en ne changeant que la composition de la solution.

Selon l'invention, il est possible de faire intervenir dans le procédé de l'invention des réactions de terminaison de la croissance des chaînes par compétition : ces réactions interrompent la croissance des chaînes, et contribuent donc à fixer l'épaisseur maximale que peut atteindre le film lorsque les chaînes sont en brosse selon le procédé de l'invention. Les inhibiteurs radicalaires ainsi que les agents de transfert de site actif dans les réactions de polymérisation radicalaire (notamment les membres de couples rédox), les protons - et par extension les molécules protiques - ainsi que les électrophiles et notamment les cations, les nuléophiles et notamment les anions, sont des composés candidats en tant qu'agent de terminaison des réactions électro-initiées de la présente invention permettant d'ajuster éventuellement le contrôle des épaisseurs.

Les réactions électro-initiées qui peuvent être mises en oeuvre dans le procédé de la présente invention tel qu'il est revendiqué sont les réactions dans lesquelles l'électro-initiation peut correspondre à une réduction d'un monomère, ou bien à une oxydation d'un monomère, grâce à un courant électrique, et où le monomère électro-réduit est l'initiateur de réactions de polymérisation anioniques, respectivement de polymérisation cationiques lorsque l'électro-initiation porte sur l'oxydation d'un monomère, sur la surface et en solution. Il peut s'agir également de réactions initiées au moyen d'un médiateur électro-actif : une fois oxydé ou réduit, ce médiateur activé sert d'initiateur de polymérisation, en général radicalaire. Parmi les médiateurs candidats, on trouve par exemple les sels de diazonium, de phosphonium, de sulfonium, d'iodonium, les peroxodisulfates, les sulfamates, les ions métalliques et leurs complexes, etc.

Selon le mode particulier de réalisation de la présente invention exposé ci-dessus, le, au moins un, monomère électro-activable précurseur du film organique peut être par exemple un monomère vinylique. Lorsqu'il s'agit d'un monomère vinylique, il peut avantageusement être choisi à partir du groupe constitué des monomères vinyliques comme l'acrylonitrile, le méthacrylonitrile, le méthacrylate de méthyle, le méthacrylate d'éthyle, le méthacrylate de butyle, le méthacrylate de propyle, le méthacrylate d'hydroxyéthyle, le méthacrylate d'hydroxypropyle, le méthacrylate de glycidyle, les acrylamides et notamment les méthacrylamides d'amino-éthyle, propyle, butyle, pentyle et hexyle, les cyanoacrylates, le polyéthylène glycol di-méthacrylate, l'acide acrylique, l'acide méthacrylique, le styrène, le parachloro-styrène, la N-vinyl pyrrolidone, la 4-vinyl pyridine, les halogénures de vinyle, le chlorure d'acryloyle, le chlorure de méthacryloyle, et de leurs dérivés.

Il peut s'agir aussi d'analogues de ces monomères vinyliques obtenus par couplage ou modification d'un de ces monomères avec une quelconque molécule ou macromolécule. Cette molécule ou macromolécule peut être par exemple choisie dans le groupe constitué d'un polymère comme le polyéthylène glycol ; d'une base azotée, comme par exemple l'adénosine, ou ses dérivés, comme par exemple la 3-déaza adénosine ; d'un oligonucléotide, comme par exemple une séquence sonde utilisée sur une puce à ADN ; d'un peptide comme par exemple un prion ; d'une protéine telle qu'une enzyme, un anti-corps... etc ; d'un acide gras, comme l'acide linoléique ; d'un glucide, comme par exemple le glucose ; d'un polysaccharide modifié ou non, comme le dextrane et les dextranes modifiés ; de la cellulose et ses dérivés ; du chitosane et ses dérivés ; etc. Le précurseur dans ce cas est un monomère vinylique couplé à cette molécule ou macromolécule.

Selon la nature de la réaction qui aura permis le couplage, il pourra également s'agir - à l'inverse - de molécules ou de macromolécules porteuses de plusieurs groupements vinyliques activés, et notamment de ceux mentionnés dans la liste ci-dessus.

Lorsque plusieurs monomères précurseurs sont utilisés dans le procédé de la présente invention, il peut s'agir d'un mélange de plusieurs monomères vinyliques choisi(s) par exemple parmi les monomères vinyliques précités. Il peut s'agir de manière générale de polymères dont la croissance a été initiée par un initiateur électro-actif dont les produits de réduction ou d'oxydation sont ioniques. Dans le cas où un médiateur a été utilisé, il s'agit de polymères dont la croissance a été initiée par le médiateur électro-actif, et dont les produits de réduction ou d'oxydation sont radicalaires.

Peuvent également être mises en oeuvre dans le procédé de la présente invention les réactions d'électro-greffage de monomères cycliques clivables par attaque nucléophile ou électrophile comme les époxydes, les lactones, par exemple l'ε-caprolactone, etc. Le principe de ces réactions est le même que pour les monomères vinyliques, mis à part le fait que la croissance du film de polymère s'effectue par ouverture de cycles.

Peuvent également être mises en oeuvre dans le procédé de la présente invention les réactions d'électro-greffage de sels de diazonium, de sulfonium, de phosphonium, d'iodonium, d'ammonium, d'alcools, de thiols, etc. Il s'agit de molécules dont la réduction conduit à des radicaux qui s'adsorbent (chimisorbtion) directement sur la surface et ne donnent lieu à aucune croissance (passivation). C'est le cas par exemple des procédés permettant de réaliser des épaisseurs très faibles, proches de la monocouche moléculaire, puisqu'il n'y a pas de croissance de chaînes de type polymérique. Le phénomène de blocage mentionné dans la présente n'est pas celui d'une croissance d'une espèce qui finirait par gêner la croissance d'autres chaînes formées plus tard, mais directement celui des sites métalliques par lesquels le courant peut passer.

Peuvent également être mises en oeuvre dans le procédé de la présente invention les réactions d'électro-polymérisation qui sont initiées par exemple par des peracides, thiolates, des sels de diazonium, de sulfonium, de phosphonium, d'iodonium, ou d'autres composés dont le produit de réduction ou d'oxydation est un radical amorceur de polymérisation en présence de monomères polymérisables par voie radicalaire tels que des monomères vinyliques tels que ceux précités, par exemple l'acrylonitrile, etc.

Peuvent également être mises en oeuvre des procédés dans lesquels les polymères sont obtenus par voie ionique, par exemple des polymères vinyliques activés, des molécules cycliques clivables par attaque nucléophile ou électrophile initiée par des radicaux anions ou cations de composés tels que les naphtalènes, des sels métalliques et autres composés dont le radical anion ou cation est un amorceur de polymérisation.

Par surface simple, au sens de la présente invention, on entend une surface d'un seul tenant, sans aspérités, ayant généralement une surface lisse ou de rugosité contrôlée, en particulier à l'échelle de l'épaisseur que l'on cherche à réaliser. Par surface complexe, au sens de la présente invention, on entend une surface composée de différentes parties distinguables ou distinctes par leur composition et/ou par leur forme, reliées entre elles par des liens conducteurs ou semi-conducteurs, ou des surfaces structurées ou non structurées, présentant des parties en dépression, gravées, en bosses, collées ou plusieurs de ces parties, ainsi que des surfaces qui se trouvent sur différentes parties du support, reliées ou non, sur lesquelles le film doit être greffé selon le procédé de la présente invention.

Le procédé de la présente invention, permet une réelle finesse de contrôle de l'homogénéité de l'épaisseur du film ou revêtement organique déposé par réactions électro-initiées autorisant la réalisation de garnitures, appelés aussi revêtements, organiques ultraminces homogènes, d'épaisseur inférieure au µm, c'est à dire à des échelles qui ne sont que très difficilement accessibles industriellement par les procédés précités de l'art antérieur sur des surfaces simples ou complexes.

En effet, le potentiel maximal de chaque balayage de potentiel, en valeur absolue par rapport à une électrode de référence, supérieur ou égal à la valeur minimale de potentiel V_{bloc} conformément au procédé de la présente invention conduit de manière inattendue à une occupation quasi maximale, en général supérieure à 50%de la surface conductrice ou semi-conductrice par le, au moins un, monomère électro-greffé dès un premier balayage de potentiel, et même supérieure à 80 voire 90% après quelques balayages seulement. En effet, les présents inventeurs ont constaté que, de manière inattendue, il suffit généralement de deux à cinq balayages de potentiel conformes à la présente invention pour obtenir l'occupation maximale de la surface. Cette situation d'occupation maximale est appelée situation de « blocage ». La croissance des chaînes greffées, quant à elle, à partir des monomères électro-greffés sur la surface, s'effectue par polymérisation purement chimique, c'est-à-dire indépendamment de la polarisation de la surface conductrice qui a donné lieu au greffage. L'occupation étant maximale, les chaînes de polymère sont greffées de manière dense sur le support puisqu'elles sont quasiment debout sur la surface et forment une « brosse ». La conséquence est que l'épaisseur du film est proche de la longueur des chaînes étendues, autorégulée et homogène.

Les présents inventeurs sont donc les tous premiers à avoir réalisé, au moyen du procédé de la présente invention, des films de polymère organiques d'épaisseur homogène même à l'échelle moléculaire.

Le nombre de balayages de potentiel pour obtenir un occupation maximale de la surface est bien entendu fonction des conditions opératoires, du type de surface et du type de film de polymère organique électrodéposé. Il peut être par exemple de N, N étant un nombre entier positif, avec 1 ≤ N ≤ 15. Cet exemple n'est pas limitatif, il permet généralement d'obtenir une occupation quasi maximale ou maximale de la surface par le ou les monomère(s) précurseur(s).

Selon la présente invention, la détermination de V_{bloc} par le graphique donnant la quantité de précurseur électro-greffé en fonction du nombre de balayages est bien entendu de préférence réalisée dans les mêmes conditions physicochimiques opératoires que celle utilisées pour l'électrogreffage selon le procédé de l'invention.

A titre illustratif, selon le mode particulier de réalisation de la présente invention, le(s) monomère(s) et le (s) solvant(s) nécessaires pour électrogreffer un film polymère selon le procédé de l'invention seront les mêmes quel ceux utilisé(s) pour déterminer le V_{bloc} au moyen du graphique. Dans ce cas, la détermination de V_{bloc} est réalisée par un graphique donnant l'épaisseur du film polymère organique en fonction du nombre de balayages dans les mêmes conditions physicochimiques opératoires que celle utilisées pour le greffage électro-initié selon le procédé de l'invention.

Selon la présente invention, le balayage de potentiels peut être un balayage continu ou discontinu, sinusoïdal ou en créneaux. Il peut s'agir par exemple d'un balayage en conditions voltammétriques ou en polarisation par multicréneaux. La polarisation par multicréneaux permet un ajustement supplémentaire du rapport entre le temps de polarisation par rapport au temps de repos, si bien qu'on observe en général qu'il est possible d'obtenir un résultat analogue à celui en conditions voltammétriques avec un nombre de balayages plus faible.

Le procédé de la présente invention permet également d'atteindre un taux d'occupation maximum de la surface, qu'elle soit simple ou complexe, par le précurseur, par exemple le monomère précurseur d'un film polymère organique, grâce à l'application de ce balayage de potentiels en tout point de ladite surface conformément au procédé de la présente invention.

Les présents inventeurs sont donc aussi les tous premiers à résoudre les problèmes techniques de l'art antérieur liés aux effets de chutes ohmiques dues aux inhomogénéité de résistance de surface en nivelant ces effets entre un point et un autre d'une surface simple ou complexe, au sens de la présente invention, grâce au procédé de la présente invention.

Le procédé de la présente invention trouve donc des applications très intéressantes notamment pour les surfaces suivantes :

Les surfaces de rugosité parfaitement contrôlée, mais constituées par, ou comprenant, des matériaux semi-conducteurs et dont l'aire est très grande devant les rugosités ou les motifs qui ont été ouvragés. C'est le cas par exemple des galettes (« wafers »), par exemple de silicium en microélectronique, dans la réalisation de revêtements pour l'interconnexion cuivre. Dans cette application, il est nécessaire d'effectuer des dépôts de matériaux à basse permittivité diélectrique (« low k dielectrics ») de faible épaisseur, en général moins de 500 nm, avec un contrôle d'épaisseur de l'ordre de quelques dizaines, voire d'une dizaine, de nanomètres sur des disques de 200 voire 300 millimètres de diamètre : tout dépôt de nature électrochimique suppose la mise en place d'un contact électrique. Souvent, ce contact électrique est réalisé à la périphérie du wafer, et une chute ohmique existe entre le contact électrique périphérique et le centre du « wafer ». Le procédé de la présente invention permet également d'obtenir un film organique d'épaisseur uniforme, même à des épaisseurs inférieures au µm, sur ce type de surface.

Les surfaces de matériaux semi-conducteurs dopés pouvant présenter des inhomogénéités de dopage, qui peuvent causer des chutes ohmiques différentielles entre le contact d'amenée de courant et différents points de la surface. Ce peut être par exemple le cas de galettes (« wafers. »), par exemple de silicium, présentant des zones de dopage, et alimentées électriquement soit en périphérie (« couronne »), soit en face arrière, c'est-à-dire par exemple par un contact où la face arrière de la galette (« wafers ») a été métallisée totalement ou partiellement. Le procédé de la présente invention permet également d'obtenir un film de organique d'épaisseur uniforme, même à des épaisseurs inférieures au µm, sur ce type de surface.

Les surfaces de conducteurs ou de semi-conducteurs sur lesquelles des gravures ont été pratiquées. Lorsque l'on tente d'effectuer des dépôts par une voie électrolytique de l'art antérieur, c'est à dire par une réaction électro-suivie, sur de telles surfaces, la contre-électrode est en général une surface plane, ou qui ne possède pas - tout au moins - une structure aussi complexe que la surface elle-même. Lorsque la surface de l'objet est mise en regard de la contre-électrode, la distance objet/contre-électrode varie d'un point à un autre de l'objet, ce qui entraîne que ces points ne voient pas la même chute ohmique, car ils ne voient pas le même volume de solution électrolytique entre les deux électrodes, et donc ne sont pas portés exactement au même potentiel. C'est le cas par exemple de « wafers » gravés, qui peuvent porter des gravures larges de quelques centaines de nanomètres pour lesquels il est nécessaire de réaliser des revêtements organiques les plus conformes possibles à la topologie de la gravure. On a tenté dans l'art antérieur de minimiser cet effet de chute ohmique en utilisant - par exemple pour le dépôt métallique - des solutions de force ionique élevée. Cependant, la recette n'était que partiellement suffisante aux échelles de la microélectronique, et il était généralement nécessaire de complexifier quand même la topologie de la contre-électrode pour parfaire l'homogénéisation des lignes de courant arrivant sur la surface à traiter. Le procédé de la présente invention permet de surmonter ces problèmes de l'art antérieur et d'obtenir un film organique d'épaisseur uniforme, même à des épaisseurs inférieures au µm, également sur ce type de surface.

Les surfaces conductrices ou semi-conductrices gravées, et dont les gravures possèdent des géométries localement saillantes. Ces zones sont la source « d'effets de pointe », qui concentrent les lignes de champ, et sont donc à l'origine d'une variation très locale de la chute ohmique apparente. Le plus souvent, cette variation est la source d'une augmentation locale du courant, ce qui a pour effet d'augmenter localement la quantité de matériau déposé (« bosses »), et donc de nuire à l'homogénéité d'épaisseur la conformité du revêtement. Le procédé de la présente invention permet d'obtenir un film de organique d'épaisseur uniforme, même à des épaisseurs inférieures au µm, également sur ce type de surface.

La présente invention trouve par exemple une application dans tout procédé de fonctionnalisation organique d'une surface, c'est à dire dans tout procédé qui consiste à garnir une surface d'un substrat ou d'un support par un film organique.

Elle trouve par exemple une application dans le domaine des microsystèmes en général tels que les capteurs, les micromachines, etc., dans lesquels il est nécessaire, pour des raisons de coût notamment, de fonctionnaliser collectivement des circuits imprimés lorsqu'ils sont encore sur leur support de type galette (« wafer ») d'origine, en y déposant des couches organiques pour la lithographie, pour un revêtement (« Chip Scale Package ») etc., ou pour tout autre fonctionnalisation organique de la surface, par exemple pour une adhérence pour le « Polymer Flip-Chip », isolation électrique, anti-adhérence de molécules biologiques, etc.

Elle trouve également une application dans la réalisation d'une couche isolante ou d'une couche barrière dans les microsystèmes tels que ceux précités, par exemple en microélectronique.

Les épaisseurs des couches organiques à déposer dans les différentes applications de la présente invention peuvent être de quelques centaines de nanomètres à quelques microns voire dizaines de microns, pour une surface de wafer dont les dimensions générales sont de 200 voire 300 millimètres.

La présente invention trouve aussi une application dans, la fabrication des biopuces, par exemple dans les procédés antérieurs à l'adressage collectif de molécules, par exemple de biomolécules. En effet, par exemple sur des supports de type capteur (« wafer ») à protubérances (« Flip-Chip »), des. éléments de composants distants, par exemple des plots d'or, doivent parfois être recouverts de revêtements organiques d'épaisseurs identiques pour permettre l'assemblage d'un second composant sans affaissement. Le procédé de la présente invention permet de fournir des films de polymères organiques formant de tels revêtements organiques et permettant des assemblages d'un second composant sans affaissement.

La présente invention trouve également une application dans la microélectronique, où le pavage peut être réduit à une zone unique qui couvre la totalité du « wafer ». Les épaisseurs peuvent alors être de l'ordre de la centaine de nanomètres ou moins, avec un contrôle qui doit être de quelque % à l'échelle d'un objet de 200 à 300 millimètres de diamètre. Le procédé de la présente invention permet un tel contrôle.

La présente invention trouve également de nombreuses applications dans le domaine de l'optique où l'uniformité du dépôt est directement reliée aux performances de l'objet macroscopique. L'homme du métier sait bien, par exemple, que dans le domaine des biopuces à détection par fluorescence, et plus généralement par détection de nature optique (génération de fréquence somme, génération de seconde harmonique, etc.), l'épaisseur du revêtement organique qui sert de primaire d'accrochage aux séquences d'oligonucléotides marquées est critique dans l'extinction du signal de fluorescence caractérisant le diagnostic d'hybridation : quelle que soit la nature de ce revêtement, la physique du phénomène demande des épaisseurs de l'ordre de quelques dizaines de nanomètres avec une précision de l'ordré de 10 à 20%, par exemple 60 (10 nanomètres pour un marqueur fluorophore de type Cy3, 80 (10 nanomètres pour un marqueur fluorophore de type CY5, pour optimiser le rapport signal sur bruit. Les mêmes études montrent une extinction quasi totale du signal de fluorescence si l'épaisseur du revêtement de fixation des oligonucléotides venait à approcher la centaine de nanomètres. La miniaturisation des supports de biopuces est actuellement en développement, mais les plots de ces supports ont encore des dimensions caractéristiques supérieures à quelques dizaines voire quelques centaines de microns. La présente invention permet d'obtenir les épaisseurs de film requises dans ces domaines de l'optique. Elle permet donc d'optimiser les performances pour les nouvelles générations de biopuces miniaturisées.

La même physique conduit évidemment aux mêmes contraintes dans le domaine de l'optique en général, de l'optoélectronique et du photovoltaïque. La présente invention apporte également une réponse à ce type de contraintes.

En outre, la présente invention trouve des applications dans la perfection optique des accessoires de mode, où les aspects de surface sont reliés à des épaisseurs de l'ordre des longueurs d'onde du visible, donc faibles devant la taille de l'objet.

D'autre caractéristiques et avantages apparaîtrons encore à l'homme du métier à la lecture de la description et des exemples suivants donnés à titre illustratif et non limitatif en référence aux dessins annexés.

### Description détaillée de l'invention

Le procédé de la présente invention repose sur le greffage et la croissance de films organiques par l'intermédiaire de réactions de polymérisation électro-initiées. Il s'agit de réactions électrochimiques dont l'un des produits au moins est adsorbé par physisorption ou chimisorption sur la surface, ce produit pouvant lui-même être impliqué dans une chimie couplée au transfert de charge, et en particulier une chimie qui provoque la croissance du film organique sur la surface où l'électro-initiation a eu lieu.

La particularité de cette chimie couplée est que sa cinétique et/ou sa thermodynamique ne sont pas corrélées au courant électrique qui accompagne l'électro-initiation. Il s'agit de réactions chimiques, autonomes, c'est-à-dire non électrochimiques, dont les paramètres d'avancement ou d'interruption peuvent être reliés par exemple à la concentration des espèces électro-actives, à la température, à la nature du solvant, ou encore à la présence d'un additif particulier dans la solution, mais où le courant électrique reste un paramètre qui n'intervient pas directement pour ce qui est de l'épaisseur du revêtement ou film organique finalement obtenu.

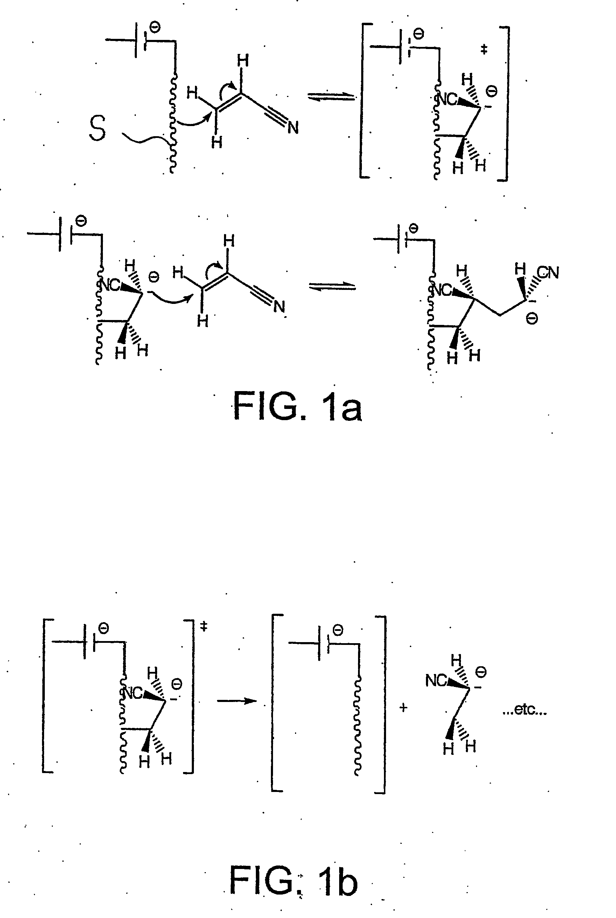

Les figures 1a) et b) annexées illustrent les mécanismes réactionnels électrochimiques mis en jeu dans un exemple illustratif de réalisation du procédé de la présente invention, lorsque le monomère précurseur du polymère organique est de l'acrylonitrile. L'électro-greffage est réalisé sous polarisation cathodique, la croissance des chaînes greffées s'effectue par polymérisation anionique.

Le courant électrique mesuré correspond à la fabrication du radical anion adsorbé sur la surface (S) par transfert électronique sur la figure 1a). Comme l'indique ce schéma réactionnel, seule une partie des radicaux anions ainsi créés vont posséder une durée de vie suffisante pour être les initiateurs d'une réaction de polymérisation. L'autre partie de ces radicaux va désorber pour produire du polymère en solution, libérant ainsi des sites métalliques sur lesquels d'autres monomères vont pouvoir venir s'adsorber pour être réduits à leur tour (figure 1b)).

Ceci renseigne sur l'absence de corrélation directe qui peut exister entre le courant voltammétrique et l'obtention du greffage dans le procédé de la présente invention.

Généralement, le courant voltammétrique diminue à chaque balayage, ce qui correspond à une occupation progressive de plus en plus importante des sites métalliques de la surface (S) par des chaînes de polymère greffées. Ce courant finit par s'annuler quasiment complètement, pour un nombre de balayages suffisant, lorsque le taux d'occupation des sites de la surface initiale est tel qu'il n'y a plus suffisamment de place disponible pour la croissance d'une nouvelle chaîne. Dans ce cas, l'éventuel courant résiduel qui peut exister, même s'il est d'ordinaire très faible, correspond majoritairement à l'étape de la figure 1b) du schéma réactionnel: le greffage en tant que tel est arrivé à son terme, c'est-à-dire que le taux maximal de chaînes par unité de surface a été atteint.

Il est important maintenant d'examiner ce qu'il est advenu des chaînes de polymère greffées en croissance : dans l'étape de la figure 1a) du schéma réactionnel, on constate que la croissance des chaînes est identique en tous points à ce qui se déroule dans une polymérisation anionique quelconque, qu'elle soit d'ailleurs électro-initiée ou non.

Cette croissance est essentiellement pilotée par la concentration en monomères ainsi qu'en inhibiteurs de polymérisation. La faible longueur des chaînes obtenues par électro-greffage laisse supposer qu'il y a une certaine gêne entre des extrémités en croissance voisines, et que la cinétique de propagation est probablement inférieure à celle qui pourrait être observée du fait d'une initiation en solution. Quoi qu'il en soit, et même si le mécanisme détaillé lié à la croissance des chaînes de polymère greffées n'est pas complètement élucidé, on peut retenir schématiquement que les longueurs des chaînes électro-greffées n'est pas reliée à l'étape d'électro-greffage elle-même : chaque monomère greffé donnant lieu à un départ de chaîne a consommé un électron et un seul, et le protocole électrochimique n'a ensuite plus de contrôle sur la réaction de propagation. Une conséquence essentielle du procédé de la présente invention est qu'il est ainsi possible de régler les épaisseurs avec une assez grande précision en réalisant un taux d'occupation des sites plus ou moins élevé : lorsque les chaînes sont greffées de manière « clairsemées » sur le support, elles ont tendance à se coucher sur la surface, l'épaisseur mesurée du film obtenu est faible et probablement non homogène, tout au moins à l'échelle moléculaire.

Lorsque les chaînes de polymère sont greffées de manière dense sur le support, c'est à dire dans les conditions de balayages de potentiel selon le procédé de la présente invention, elles sont quasiment debout sur la surface et forment une « brosse » et l'épaisseur du film est proche de la longueur des chaînes étendues.

C'est donc, pour une solution électrolytique de composition donnée, davantage le taux d'occupation de la surface qui conditionne l'épaisseur obtenue suivant le procédé de la présente invention, et non la croissance des chaînes en elles-mêmes. Or, comme il a été décrit plus haut, le taux d'occupation peut être augmenté graduellement, jusqu'à une valeur limite, où les croissances de chaînes sont empêchées par l'encombrement trop élevé sur la surface. Comme ce taux d'occupation conditionne l'épaisseur, l'épaisseur des revêtements électro-greffés selon le procédé de la présente invention est bien « autorégulée ».

Le procédé de la présente invention utilise un monomère précurseur du polymère organique. Une fois activé, c'est à dire réduit ou oxydé, ce monomère devient la source d'une chimie conduisant à la production de molécules ou de macromolécules qui vont gêner elles-mêmes la production de leurs semblables, jusqu'à bloquer l'ensemble du processus. Une fois le processus bloqué, le monomère électro-actif peut éventuellement continuer à être réduit ou oxydé, mais la chimie couplée au transfert de charge est limitée à la formation d'espèces solubles ou ne provoquant plus de modifications de la première couche moléculaire du monomère précurseur fixée sur la surface du support, et les caractéristiques du film ou revêtement, par exemple son épaisseur, se stabilisent. Ce mécanisme est très probablement à la source de l'autorégulation de l'épaisseur du film qui est observée en utilisant le procédé de la présente invention.

Dans la pratique, il est nécessaire d'examiner les conditions opératoires par lesquelles on peut atteindre la borne supérieure du taux d'occupation des surfaces, c'est-à-dire la situation de blocage et d'autorégulation mentionnée ci-dessus, et dans quelle mesure elle peut être atteinte avec une certaine tolérance sur les chutes ohmiques, c'est-à-dire sur une gamme de potentiels.

La détermination du potentiel V_{bloc}, c'est à dire la valeur minimale de potentiel utilisée comme potentiel d'arrêt en conditions voltammétriques, ou comme potentiel de plateau en polarisation par multicréneaux, pour le greffage et la croissance d'un film de polymère organique donné conformément au procédé de la présente invention est réalisée au moyen des courbes d'un graphique donnant l'épaisseur dudit film polymère organique électrogreffé en fonction du nombre de balayages.

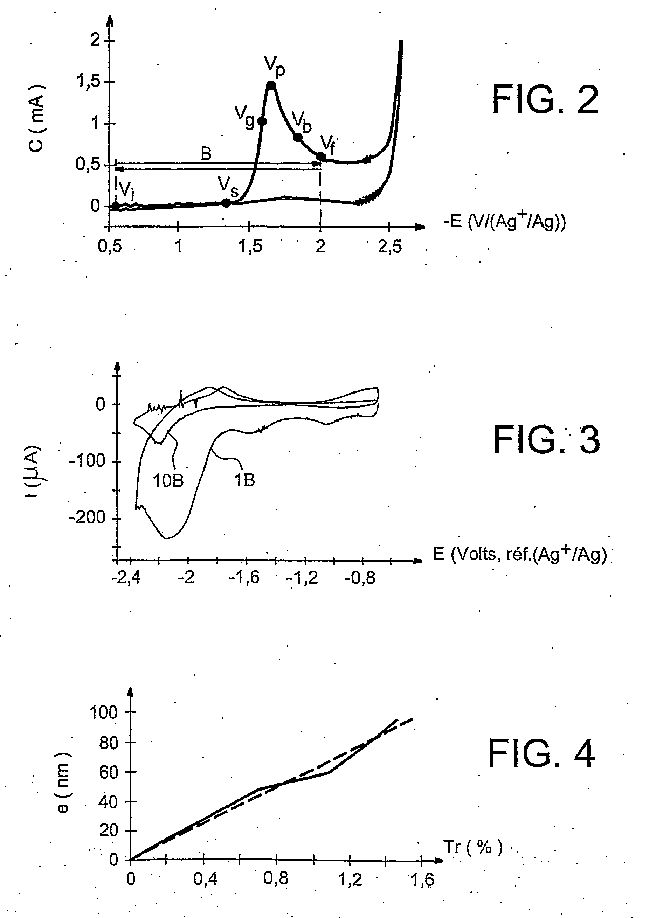

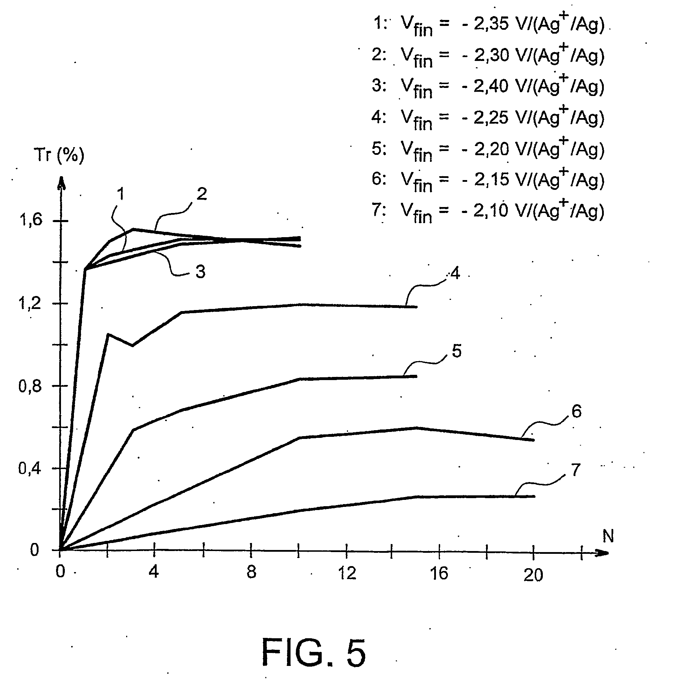

La figure 5 annexée représente un tel graphique. Sur cette figure, Tr (%) représente le pourcentage de transmission à la longueur d'onde d'absorption du vibrateur des liaisons nitriles CN du film électro-greffé (mesuré en spectroscopie infrarouge en réflexion, ou IRRAS), et N le nombre de balayages. L'abaque de la Figure 4 montre que ce % de transmission est relié à l'épaisseur du film électro-greffé, mesurée indépendamment par profilométrie.

Sur cette figure V_{bloc}, est la valeur de potentiel à partir de laquelle les courbes donnant l'épaisseur du film électro-greffé en fonction du nombre de balayages sont toutes superposées.

Dans cet exemple, dans lequel le monomère précurseur est du méthacrylonitrile, V_{bloc} est de de -2,3 à -2,5 V(Ag⁺/Ag), de préférence d'environ -2,4 V/(Ag⁺/Ag).

L'électrogreffage selon la présente invention peut être suivit au moyen d'un voltammogramme typique pour les réactions d'électro-greffage tel que représenté sur la figure 2 annexée. Cette figure représente le courant (en mA) en fonction du potentiel (-E) auquel est soumise la surface, ce potentiel étant repéré par rapport à une électrode de référence en argent. Les flèches horizontales indiquent les balayages de potentiels. V représente le potentiel à un temps t, au cours des balayages.

Ce voltammogramme est caractérisé par les potentiels critiques suivants :
- Pour V < Vₛ, « Vₛ » étant le potentiel de seuil, il n'y a quasiment pas de courant électrique. Le système est quasi-stationnaire du point de vue des échanges électroniques, et la surface reste inchangée.
- Pour Vₛ < V < V_{g}, «V_{g} » étant le potentiel à partir duquel un greffage sur la surface du monomère précurseur apparaît, le courant est dû essentiellement au mécanisme de la Figure 1b) annexée, et l'on n'observe pas de film électro-greffé.
- Pour V_{g} < V < V_{bloc}, « V_{bloc} » étant le potentiel de blocage, une partie du courant est due au film électro-greffé, et une partie sert à la formation d'un polymère en solution. Ceci correspond au schéma de la figure 1a). Le potentiel de blocage est assez délicat à définir précisément, mais on peut considérer qu'il est supérieur au potentiel de pic, V_{pic}. C'est lorsque le potentiel est situé dans cette zone que le greffage, et donc l'augmentation du taux d'occupation de la surface, a lieu. On peut par exemple effectuer des balayages voltammétriques entre un potentiel initial « Vᵢ » et un potentiel final « V_{fin} » : c'est lorsque V_{fin} > V_{bloc} que des balayages répétés permettront d'atteindre le processus de blocage selon la présente invention. Dans un autre mode de réalisation du procédé de la présente invention, le même résultat peut être obtenu avec des multi-créneaux de potentiel.
- Pour V > V_{bloc}, le courant électrique est limité, soit par la diffusion, soit par la réaction de polymérisation en solution. De façon générale, on n'observe plus - au-delà d'un nombre minimal de balayages - de modification sensible de l'épaisseur du film obtenu dans cette zone de potentiel, puisque le blocage de la réaction de greffage a eu lieu.

Sur la figure 5, on observe que quel que soit le potentiel d'arrêt V_{fin}, l'épaisseur du film électro-greffé est bornée en fonction du nombre de balayages : les courbes donnant l'épaisseur en fonction du nombre de balayages possèdent une asymptote, qui permettent d'apprécier l'épaisseur limite que l'on peut atteindre en utilisant un potentiel d'arrêt V_{fin} donné comme paramètre de la synthèse.

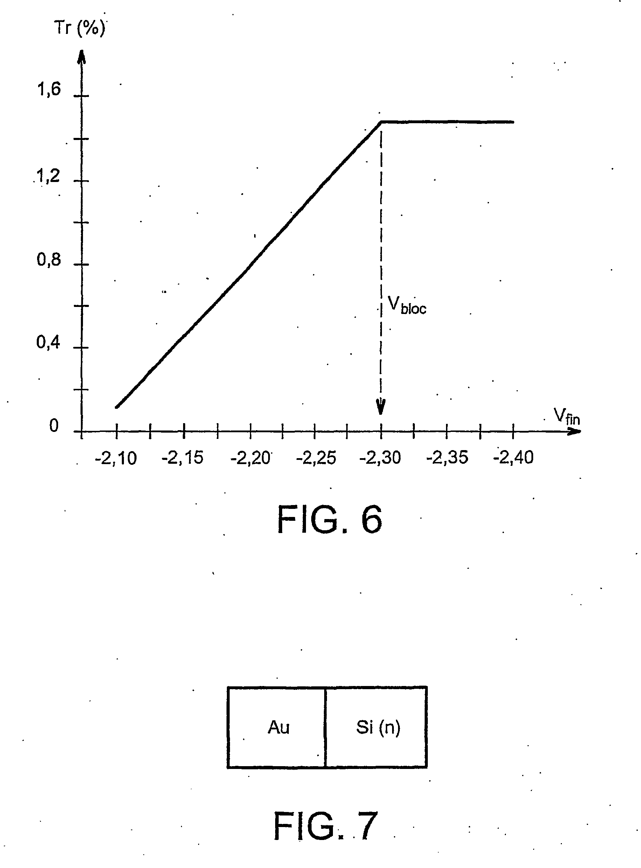

La figure 6 représente le % de transmittance du marqueur nitrile correspondant à ces épaisseurs limites en fonction du potentiel d'arrêt V_{fin} des balayages voltammétriques utilisés, d'après les données de la figure 5. On observe qu'il existe un potentiel cathodique, V_{bloc}, au-delà duquel l'épaisseur du film électro-greffé est indépendant du potentiel V_{fin} utilisé : cette observation sert à définir le potentiel de blocage V_{bloc}.

Ainsi, selon la présente invention, une succession de balayages voltammétriques avec un potentiel final V_{fin} « flou », par exemple sous l'effet d'une chute ohmique parasite ou due à une surface complexe, n'aura pas d'influence sur la qualité du film organique greffé, en particulier sur son épaisseur, tant que le potentiel V_{fin} effectif sera supérieur à V_{bloc} partout sur la surface sur laquelle le film doit être greffé.

Ainsi, lorsque l'on réalise l'électro-greffage par balayages voltammétriques selon le procédé de la présente invention, par exemple à partir d'un potentiel initial de -0,7 V/(Ag⁺/Ag) à une vitesse de balayage de 100 mV/s, sur une surface d'or, d'une solution à 2,5 mol/l de méthacrylonitrile dans la diméthyl formamide (DMF) en présence de 10⁻² mol/l de perchlorate de tétraéthyl ammonium (TEAP) : on a Vₛ (-1,6 V/(Ag⁺/Ag), V_{pic} = -2,25 V/(Ag⁺/Ag), V_{g} (-2,2 V/(Ag⁺/Ag), V_{bloc} (-2,3 V/(Ag⁺/Ag). Les courants observés sont de l'ordre du milliampère.

Conformément au procédé de la présente invention, le potentiel maximal de chaque balayage de potentiel doit en conséquence être atteint, au minimum, en tout point de la surface sur laquelle est greffé le film polymère pour obtenir un film d'épaisseur uniforme.

Considérons une première et une deuxième surfaces d'or connectées électriquement en série, mais séparées par une résistance de 100 kΩ, dont l'une est connectée à un potentiostat. Il s'agit d'une surface complexe au sens de la présente invention. Pour des courants de l'ordre du milliampère, la chute ohmique entre les deux surfaces d'or est de l'ordre de 100 mV. Ainsi, si la première surface connectée au potentiostat est par exemple polarisée jusqu'à -2,35 V/(Ag⁺/Ag) ou si, en conditions voltammétriques, le potentiel final du balayage est de V_{fin} = -2,35 V/(Ag⁺/Ag), la seconde surface, connectée à la première, ne verra, elle, qu'un potentiel d'environ -2,25 V/(Ag⁺/Ag), soit très proche du potentiel de greffage V_{g}. Même après plusieurs balayages, les inventeurs ont observé un film électro-greffé moins épais sur la première surface directement connectée au potentiostat, que sur la deuxième surface.

Si la première surface connectée au potentiostat est portée à un potentiel de -2,6 V/(Ag⁺/Ag) ou si, en conditions voltammétriques, le potentiel final du balayage est de V_{fin} = -2,6 V/(Ag⁺/Ag), le potentiel auquel est porté la seconde surface est de -2,5 V/(Ag⁺/Ag), supérieur au potentiel de blocage. Ainsi, le potentiel maximal de chaque balayage est supérieur à V_{bloc} en tout point de cette surface complexe. Pour un nombre de balayages voltammétriques suffisant, un film électro-greffé est obtenu sur les deux surfaces, d'épaisseurs identiques. Le film obtenu a une épaisseur uniforme de 90 nanomètres environ pour 10 balayages sur toute la surface.

Les valeurs de V_{g} et de V_{bloc} sont difficiles à indiquer avec une grande précision pour une généralisation. En effet, pour V_{g}, il s'agit de la valeur à laquelle on est en mesure de mettre en évidence un film électro-greffé : cette appréciation peut varier aussi en fonction du moyen d'analyse de surface mis en oeuvre pour obtenir cette détection, car la sensibilité d'un appareil de spectroscopie infrarouge en réflexion, par exemple, n'est pas la même que celle d'un appareil de spectroscopie de photoélectrons X.

Comme indiqué dans les exemples de réalisation ci-dessous, des barres d'erreur sont associées à la mesure des épaisseurs selon la technique de mesure utilisée, par exemple par profilométrie ou ellipsométrie, ce qui, combiné à la tolérance autorisée sur la notion « d'uniformité d'épaisseur », peut conduire à un certain flou sur la valeur du potentiel de saturation V_{bloc}. Il est à noter que ce flou n'est pas intrinsèque au procédé, mais aux choix de l'opérateur sur la finesse de son contrôle.

L'homme du métier saura aisément adapter le procédé de la présente invention en suivant les indications fournies dans cette description pour obtenir une épaisseur uniforme de film sur toute la surface.

Les présents inventeurs ont également mis en évidence que les réactions électro-initiées selon le procédé de l'invention sont aussi des réactions possédant un seuil flou de déclenchement en potentiel. Ils ont astucieusement tiré parti de cette observation pour obtenir, sur deux zones distantes, des dépôts organiques d'épaisseurs différentes simultanément contrôlées, en reliant électriquement ces deux zones en série via une impédance judicieusement choisie. Par exemple, on peut relier deux plots d'or d'un même « wafer » par une résistance électrique de 100 kΩ. En utilisant, dans les conditions voltammétriques précédemment indiquées, un potentiel d'arrêt de V_{fin} = -2,30 V/(Ag⁺/Ag), la surface reliée au potentiostat « verra » un potentiel de -2,30 V/(Ag⁺/Ag), alors que la surface reliée à la première ne verra qu'un potentiel de -2,20 V/(Ag⁺/Ag) : d'après la figure 5, on voit qu'un film donnant une transmittance de 1,5% sera formé sur la surface reliée au potentiostat, alors que le film formé sur la surface reliée à la première via la résistance n'aura une épaisseur que de 0,9%.

A l'inverse, lorsque l'on veut obtenir deux épaisseurs données à deux endroits différents, on choisit le potentiel d'arrêt comme celui donnant la plus grande des deux épaisseurs (figure 5), et les données de la figure 5 permettent de déterminer le potentiel que doit « voir » la zone sur laquelle on veut déposer la seconde épaisseur. Connaissant le courant électrique relié à la réaction d'électro-greffage, on peut ainsi déterminer l'impédance qui doit être insérée entre les deux zones de la surface sur lesquelles on veut des épaisseurs différentes.

### Brève description des figures

- Les figures 1a) et b) sont une illustration schématique des réactions électrochimiques en jeu dans le procédé de la présente invention, lorsque le monomère précurseur du polymère organique est l'acrylonitrile.
- La figure 2 est un voltammogramme type accompagnant une réaction d'électro-greffage d'un monomère vinylique activé. Les potentiels sont à considérer en valeur absolue, ils sont en fait négatifs pour une polarisation cathodique, et positifs pour une polarisation anodique.
- La figure 3 représente des voltammogrammes obtenus sur or à 100 mV/s des premier et dixième balayages d'une solution à 2,5 mol/l de méthacrylonitrile dans la DMF en présence de TEAP.
- La figure 4 est un abaque montrant l'épaisseur de films de polyméthacrylonitrile (PMAN), mesurée par profilométrie, en fonction de la transmittance de la bande des groupements nitrile (Tr (%))du PMAN à 2200 cm⁻¹ obtenue par IRRAS.
- La figure 5 est une représentation graphique de l'épaisseur de films de polyméthacrylonitrile (PMAN) électro-greffés sur or en conditions voltammétriques, en fonction du nombre de balayages, pour différentes valeurs du potentiel d'arrêt.
- Figure 6 : est une représentation graphique de l'épaisseur de films de polyméthacrylonitrile (PMAN) (évaluées via la transmittance du marqueur nitrile en IRRAS) électro-greffés sur or en conditions voltammétriques, en fonction du potentiel d'arrêt V_{fin} utilisé dans un protocole opératoire en conditions voltammétriques. Les transmittances utilisées sont celles des asymptotes observées dans le protocole de la figure 5.
- La figure 7 : est une représentation schématique vue de dessus des lames utilisées : Si épitaxié puis dopé n sur substrat SOI, puis sous-couche de titane/nickel sur la moitié de la lame, et enfin dépôt d'or sous vide sur la sous-couche d'adhésion.
- La figure 8 : est un spectre IRRAS de films de Poly 4-Vinyl Pyridine (P4VP) obtenus par électro-greffage sur or, pour différents potentiels d'arrêt V_{fin}.
- La figure 9 : est une représentation graphique de la variation de l'épaisseur, mesurée par profilométrie, de films de P4VP obtenus par 20 balayages voltammétriques entre le potentiel d'équilibre et différents potentiels d'arrêt V_{fin}.
- La figure 10 : est un spectre IRRAS de films de polybutylméthacrylate (PBUMA) obtenus par électro-greffage sur or, pour différents potentiels d'arrêt V_{fin}.
- Figure 11 : est une représentation graphique de la variation de l'épaisseur, mesurée par profilométrie, de films de PBUMA obtenus par 20 balayages voltammétriques entre le potentiel d'équilibre et différents potentiels d'arrêt V_{fin}.

Sur ces figures : « S » représente la surface ; « Vp » représente le potentiel de pic ; « Vg » représente le potentiel seuil à partir duquel l'électrogreffage apparaît sur la surface ; « Vs » le potentiel seuil en-deça duquel il n'y a pas de courant sur la surface ; « Vi » le potentiel initial de balayage ; « B » indique le balayage en potentiel ; « Vb » indique Vbloc, un potentiel de blocage ; « Vf » indique le potentiel final de balayage en potentiel de la surface ; « C » le courant en mA ; « I » l'intensité en µA ; « e » l'épaisseur en nm ; « Tr » la transmission en % ; « N » le nombre de cycles ou nombre de balayage de potentiel ; « NO » le nombre d'onde en cm⁻¹.

### Exemples

### EXEMPLE 1 : QUALIFICATION DES POTENTIELS CRITIQUES POUR L'ELECTRO-GREFFAGE DU METHACRYLONITRILE SUR OR

On utilise comme électrodes de travail des lames de verre, de type lames de microscope, recouvertes d'un dépôt d'or obtenu par évaporation sur une sous-couche de chrome. Un montage à trois électrodes standard est utilisé, avec une électrode d'argent comme électrode de référence.

Les trois électrodes plongent dans une solution à 2,5 mol/l de méthacrylonitrile dans la diméthyl formamide (DMF) en présence de 10⁻² mol/l de perchlorate de tétraéthyl ammonium (TEAP). A l'aide d'un potentiostat, on applique aux électrodes de travail un balayage linéaire de potentiel à 100 mV/s depuis un potentiel Vᵢ = -0,6 V/(Ag⁺/Ag) jusqu'à un potentiel V_{fin} et retour.

La Figure 3 annexée montre le voltammogramme du premier balayage (1B) sur lequel le système se déplace, ainsi que du dixième balayage (10B).

Chaque lame, utilisée comme électrode de travail voit, pour un potentiel V_{fin} donné, un certain nombre de balayages en potentiel entre Vᵢ et V_{fin}. La lame est sortie, rincée à la DMF, séchée. On mesure ensuite l'épaisseur du film électro-greffé obtenu à partir de son spectre infrarouge en réflexion (IRRAS), à l'aide de l'abaque représenté sur la figure 4 annexée.

Le même travail est réalisé sur plusieurs séries de lames obtenues avec des potentiels d'arrêt V_{fin} de -2,10 ; -2,15 ; -2,20 ; -2,25 ; -2,30 ; -2,35 et -2,40 V/(Ag⁺/Ag).

La courbe donnant l'épaisseur des films obtenus sur les différentes lames en fonction du nombre de balayages pour ces différents potentiels d'arrêt, ou potentiels maximum de balayages, est indiqué à la figure 5 annexée.

On observe que les courbes sont toutes confondues pour V_{fin} (-2,30 V/(Ag⁺/Ag) qui correspond ainsi au potentiel de saturation ou blocage dans le cadre des mesures d'épaisseur effectuées (voir figure 6). Cette valeur de potentiel correspond à V_{bloc} au sens de la présente invention pour ce film de polymère organique.

On observe de plus que pour un potentiel d'arrêt supérieur au potentiel de saturation, la reproductibilité en épaisseur est de très bonne qualité, puisque la variation observée est ici de l'ordre de 5 à 10 nm.

Cet exemple montre qu'une épaisseur de film homogène peut être obtenue grâce au procédé de la présente invention en utilisant comme potentiel maximal de chaque balayage le potentiel V_{bloc} déterminé sur le graphique de la figure 5 annexée.

### EXEMPLE 2 : OBTENTION DE FILMS ELECTRO-GREFFES D'EPAISSEURS ANALOGUES SUR DEUX PLOTS CONNECTES AU POTENTIOSTAT VIA UNE IMPEDANCE RESPECTIVEMENT NULLE ET NON NULLE

Le but de cet exemple est de démontrer que l'on peut réaliser un contrôle de l'épaisseur d'un film électro-greffé malgré la présence d'une chute ohmique entre le potentiostat et la surface conductrice sur laquelle l'électro-greffage a lieu.

Les surfaces choisies pour illustrer cet exemple sont des lames composites obtenues à partir d'un substrat SOI (SiO₂) sur lequel on réalise un dépôt de silicium par épitaxie, puis un dopage ionique n, puis un dépôt d'or, sous vide, sur la moitié de la lame, en ayant au préalable déposé une sous-couche titane/nickel d'adhésion de quelques nanomètres.

Les échantillons obtenus sont représentés schématiquement sur la Figure 6 annexée. Il s'agit de surfaces complexes au sens de la présente invention.

Ces échantillons sont utilisés comme électrodes de travail dans une cellule électrochimique à trois électrodes.

La synthèse est réalisée en suivant le protocole suivant :
- *Solution* : Méthacrylonitrile (40 %) dans DMF, en présence de 5.10⁻² M de tétraéthyl-ammonium perchlorate (TEAP) ;
- *Cellule* : téflon, sans compartiments séparés, volume 13 ml ;
- *Contre-électrode* : feuillé de Pt 10,4 cm² ;
- *Electrode de référence* : Ag/AgClO₄ ;
- *Surface électrode de travail* : 6,6 cm² ;
- *Electrochimie* : N cycles, conditions voltammétriques : 100 mV/s : Vₒₙ = -0,6 V/(Ag⁺/Ag) à V_{fin} (variable). La totalité de la lame est trempée dans le milieu de synthèse. Le contact électrique (pince crocodile) est réalisé soit sur l'or soit sur le silicium ;
- *Rinçage électrode* : 15 minutes sous ultrasons dans l'acétone +15 minutes sous ultrasons dans l'eau.

Trois essais complémentaires sont réalisés :
(i) le contact électrique de l'électrode de travail est pris sur le plot d'or. La lame est traitée par balayages voltammétriques, jusqu'à un potentiel d'arrêt de -2,4 V/(Ag⁺/Ag);
(ii) le contact électrique de l'électrode de travail est pris sur le plot de silicium. La lame est traitée par balayages voltammétriques, jusqu'à un potentiel d'arrêt de -2,4 V/(Ag⁺/Ag);
(iii) le contact électrique de l'électrode de travail est pris sur le plot de silicium. La lame est traitée par balayages voltammétriques, jusqu'à un potentiel d'arrêt de -2,6 V/(Ag⁺/Ag).

Les épaisseurs en (mm) des revêtements de polyméthacrylonitrile obtenus sur l'or sont mesurées par profilométrie, en fonction de la transmittance (en %) de la bande des groupements nitrile du PMAN à 2200 cm⁻¹ obtenue par IRRAS. Les résultats sont représentés sur la figure 4 annexée.

Le tableau 1 suivant résume les conditions opératoires et épaisseurs des revêtements de polyacrylonitrile obtenus sur le plot d'or d'échantillons du type de celui représenté sur la figure 6 selon que le contact électrique (pince crocodile) est pris sur le plot d'or (i) ou sur le plot de silicium (ii) et (iii).

**Tableau 1**

| **Expérience** | **N** | **V_{fin}** **(V/(Ag⁺/Ag))** | **Epaisseur** **(nm)** |
|---|---|---|---|
| (i) | 50 | - 2,4 | 48 ( 5 |
| (ii) | 50 | - 2,4 | 10 ( 5 |
| (iii) | 50 | - 2,6 | 38 ( 5 |

Dans les conditions opératoires choisies, le potentiel de blocage V_{bloc} est sensiblement le même que celui de l'exemple 1.

Les conditions des expériences (i) et (ii) sont telles que le potentiel d'arrêt est proche du potentiel de blocage, mais dans l'expérience (ii) une chute ohmique existe entre la borne du potentiostat et le plot d'or, si bien que le potentiel effectivement « vu » par le plot d'or est inférieur au potentiel de blocage : l'épaisseur du film de polyméthacrylonitrile est sensiblement inférieure à celle obtenue dans l'expérience (i).

Dans l'expérience (iii), on reproduit l'expérience (ii), mais en imposant cette fois un potentiel d'arrêt plus cathodique que le potentiel de blocage, on observe que l'on parvient à retrouver sur le plot d'or une épaisseur comparable à celle obtenue dans l'expérience (i).

La chute de potentiel causée par le plot de silicium, qui n'a pas été mesurée, peut donc être estimée à environ 200 mV.

Les résultats montrent que c'est bien la valeur du potentiel de l'électrode de travail qui, pour un nombre de balayages voltammétriques suffisant, permet de contrôler l'épaisseur du film électro-greffé.

En outre, les films obtenus sont d'épaisseur homogène sur chaque surface conformément à la présente invention, lorsque le potentiel maximum de chaque balayage est supérieur à V_{bloc} en tout point de la surface, c'est-à-dire, compte tenu de la chute de potentiel (ohmique) précitée, lorsque le potentiel dans le cas (ii) au niveau du contact électrique est; en valeur absolue, supérieur ou égal à V_{bloc} + 200 mV. En effet, le potentiel au niveau du plot d'or est alors supérieur ou égal à V_{bloc}, ce qui assure une épaisseur de film uniforme sur cette surface complexe au sens de la présente invention.

### EXEMPLE N°3 : QUALIFICATION DU POTENTIEL V_{BLOC} POUR L'ELECTRO-GREFFAGE DE LA 4-VINYL PYRIDINE SUR OR

On utilise comme électrodes de travail des lames de verre recouvertes d'or telles que décrites dans l'exemple n°1.

Un montage à trois électrodes standard est utilisé, avec une électrode d'argent comme électrode de référence. Les trois électrodes plongent dans une solution à 30% de 4-vinyl pyridine distillée dans la DMF commerciale en présence de 5.10⁻² mol/l de perchlorate de tétraméthyl ammonium (TMAP).

A l'aide d'un potentiostat, on applique aux électrodes de travail 20 cycles d'un balayage linéaire de potentiel à 100 mV/s depuis un potentiel initial Vᵢ égal au potentiel d'équilibre jusqu'à un potentiel V_{fin} et retour. Ce nombre de cycles a été choisi par les inventeurs car il correspond au nombre minimal de , cycles, pour ce monomère et dans ces conditions opératoires, permettant d'atteindre l'asymptote de la courbe donnant l'épaisseur en fonction du nombre de cycles en conditions voltammétriques.

Quatre potentiels V_{fin} sont considérés : -2,4, -2,5, -2,6 et -2,7 V/(Ag⁺/Ag). Dans les conditions opératoires, le potentiel de pic est égal à -2,4 V/(Ag⁺/Ag).

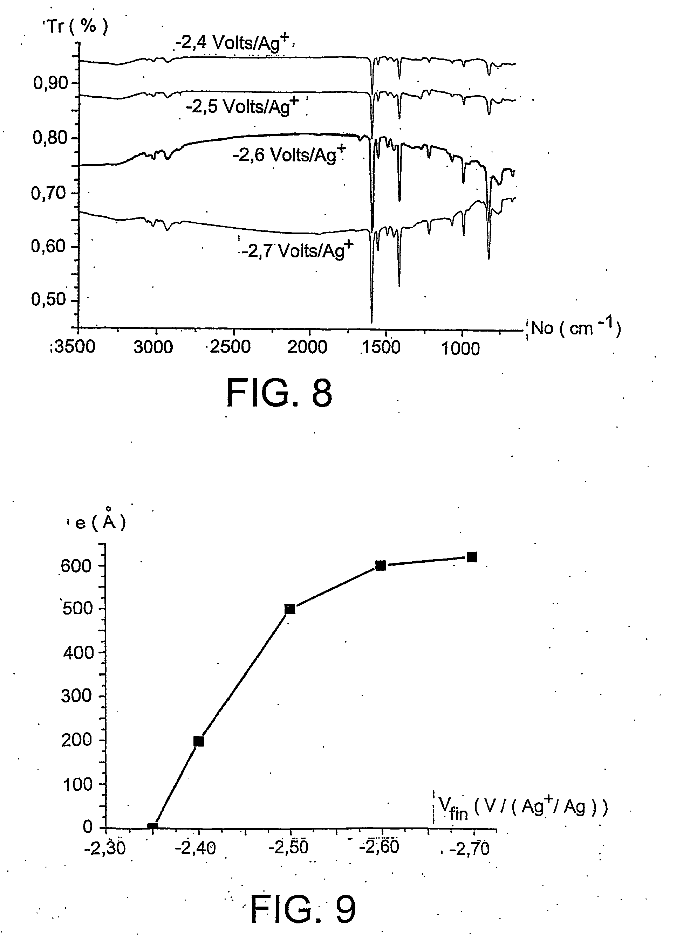

Chaque lame est sortie, rincée à la DMF, séchée sous courant d'azote. On mesure ensuite l'épaisseur du film électro-greffé obtenu à partir de son spectre infrarouge en réflexion IRRAS représenté sur la figure 8 annexée, à l'aide d'un abaque adapté. La mesure de ces épaisseurs est également effectuée de façon indépendante par profilométrie, et l'on observe que les résultats sont cohérents entre les deux types de mesures.

La courbe donnant l'épaisseur des films obtenus sur les différentes lames en fonction du nombre de balayages pour ces différents potentiels d'arrêt est indiqué sur la figure 9 annexée.

On observe une asymptote d'épaisseurs pour V_{fin} (-2,60 V/(Ag⁺/Ag), qui correspond ainsi au potentiel de saturation V_{bloc} pour la 4-vinyl pyridine sur or dans le cadre des mesures d'épaisseur effectuées. On observe que pour un potentiel d'arrêt supérieur au potentiel de saturation, la reproductibilité en épaisseur est de très bonne qualité, puisque la variation observée est de l'ordre de 5 à 10 nm.

### EXEMPLE N°4 : QUALIFICATION DU POTENTIEL V_{BLOC} POUR L'ELECTRO-GREFFAGE DU BUTYL METHACRYLATE (BUMA) SUR OR

On utilise comme électrodes de travail des lames de verre recouvertes d'or telles que décrites dans l'exemple n°1.

Un montage à trois électrodes standard est utilisé, avec une électrode d'argent comme électrode de référence. Les trois électrodes plongent dans une solution à 30% de butyl méthacrylate (BuMA) dans la DMF commerciale en présence de 5.10⁻² mol/l de perchlorate de tétraméthyl ammonium (TMAP).

A l'aide d'un potentiostat, on applique aux électrodes de travail 20 cycles d'un balayage linéaire de potentiel à 100 mV/s depuis un potentiel initial Vᵢ égal au potentiel d'équilibre jusqu'à un potentiel V_{fin} et retour. Ce nombre de cycles a été choisi car il correspond au nombre minimal de cycles, pour ce monomère et dans ces conditions opératoires, permettant d'atteindre l'asymptote de la courbe donnant l'épaisseur en fonction du nombre de cycles en conditions voltammétriques.

Quatre potentiels V_{fin} sont considérés : -2,4, -2,7, et -2, 9 V/(Ag⁺/Ag). Dans les conditions opératoires, le potentiel de pic est égal à -2,73 V/(Ag⁺/Ag).

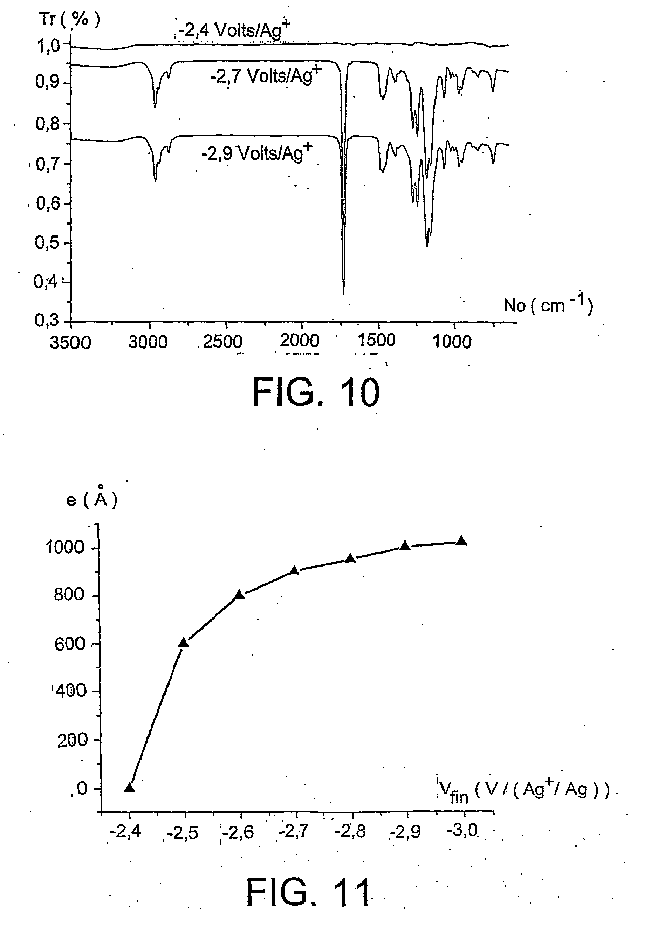

Chaque lame est sortie, rincée à la DMF, séchée sous courant d'azote. On mesure ensuite l'épaisseur du film électro-greffé obtenu à partir de son spectre infrarouge en réflexion IRRAS représenté sur la figure 10 annexée, à l'aide d'une abaque adaptée. La mesure de ces épaisseurs est également effectuée de façon indépendante par profilométrie, et l'on observe que les résultats sont cohérents entre les deux types de mesures.

La courbe donnant l'épaisseur des films obtenus sur les différentes lames en fonction du nombre de balayages pour ces différents potentiels d'arrêt est indiqué sur la figure 11.

On observe une asymptote d'épaisseurs pour V_{fin} (-2,60 V/(Ag⁺/Ag), qui correspond ainsi au potentiel de saturation dans le cadre des mesures d'épaisseur effectuées conformément au procédé de la présente invention. On observe que pour un potentiel d'arrêt supérieur au potentiel de saturation, la reproductibilité en épaisseur est de très bonne qualité, puisque la variation observée est de l'ordre de 5 à 10 nm.

### EXEMPLE N°5 : EFFETS DU NIVELLEMENT ET DIFFERENCE ENTRE POLYMERES CONDUCTEURS ET POLYMERES ELECTRO-GREFFABLES

Sur un substrat semi-conducteur (surface de TiN), on tente de réaliser l'électro-déposition du polypyrrole en polarisant une surface de TiN (lame) plongée aux 2/3 dans une solution de pyrrole (pince de connexion hors de la solution).

Après une polarisation longue, on n'observe de film de PPy qu'au voisinage du ménisque. Plus on polarise longtemps, plus la zone "descend" vers le bout de la lame, mais plus l'épaisseur au ménisque est importante.

La même manipulation avec des monomères adéquats et un protocole selon l'invention donne un film homogène sur toute la lame.

## Revendications

1. Procédé de garniture d'une surface simple ou complexe, conductrice ou semi-conductrice de l'électricité, par un film organique à partir d'au moins un précurseur dudit film organique, **caractérisé en ce que** la garniture de la surface par le film organique est réalisée par greffage électro-initié dudit, au moins un, précurseur sur ladite surface par application sur cette surface d'au moins un balayage de potentiels effectué de manière à ce qu'en tout point de ladite surface le potentiel maximal de chaque balayage de potentiels, en valeur absolue et par rapport à une électrode de référence, est supérieur ou égal à la valeur de potentiel (V_{bloc}) à partir de laquelle les courbes d'un graphique exprimant la quantité de précurseur électro-greffé sur une surface identique à ladite surface en fonction du nombre de balayages de potentiel sont toutes superposées et indépendantes de ce potentiel V_{bloc}.

2. Procédé selon la revendication 1, dans lequel le film organique est un film polymère organique et le précurseur est un monomère électro-actif précurseur dudit film polymère organique.

3. Procédé selon la revendication 2, dans lequel le monomère précurseur du polymère organique est un monomère vinylique ou un mélange de monomères vinyliques.

4. Procédé selon la revendication 2, dans lequel le, au moins un, monomère précurseur du polymère organique étant un monomère vinylique, il est choisi à partir du groupe constitué des monomères vinyliques comme l'acrylonitrile, le méthacrylonitrile, le méthacrylate de méthyle, le méthacrylate d'éthyle, le méthacrylate de butyle, le méthacrylate de propyle, le méthacrylate d'hydroxyéthyle, le méthacrylate d'hydroxypropyle, le méthacrylate de glycidyle, les acrylamides et notamment les méthacrylamides d'amino-éthyle, propyle, butyle, pentyle et hexyle, les cyanoacrylates, le polyéthylène glycol di-méthacrylate, l'acide acrylique, l'acide méthacrylique, le styrène, le parachloro-styrène, la N-vinyl pyrrolidone, la 4-vinyl pyridine, les halogénures de vinyle, le chlorure d'acryloyle, le chlorure de méthacryloyle, et de leur dérivés.

5. Procédé selon la revendication 2, dans lequel la polymérisation électro-initiée consiste en un électro-greffage de monomères cycliques clivables par attaque nucléophile ou électrophile.

6. Procédé selon la revendication 2, dans lequel la polymérisation électro-initiée consiste en un électro-greffage de sels de diazonium, de sulfonium, de phosphonium ou d'iodonium.

7. Procédé selon la revendication 2, dans lequel la polymérisation électro-initiée est initiées par des sels de diazonium, de sulfonium, de phosphonium ou d'iodonium, en présence de monomères polymérisables par voie radicalaire tels que des monomères vinyliques ou des molécules cycliques clivables.

8. Procédé selon la revendication 1, dans lequel le précurseur est un monomère vinylique couplé à une molécule ou une macromolécule choisie dans le groupe constitué d' un polymère comme le polyéthylène glycol ; d'une base azotée ou d'une base azotée dérivée ; d'un oligonucléotide ; d'un peptide; d'un acide gras ; d'un glucide ; d'un polysaccharide modifié ou non ; de la cellulose et ses dérivés et du chitosane et ses dérivés.

9. Procédé selon la revendication 2, dans lequel N balayages de potentiels sont appliqués, N étant un nombre entier positif, avec 1 ≤ N ≤ 15.

10. Procédé selon la revendication 2, dans lequel le balayage de potentiel est un balayage voltammétrique ou en multicréneaux.

11. Procédé selon la revendication 2, dans lequel le monomère précurseur étant le méthacrylonitrile, Vbloc est de -2,3 à -2,5 V(Ag⁺/Ag).

12. Garniture obtenue par le procédé de la revendication 1.

13. Utilisation d'un procédé selon la revendication 1, pour la fonctionnalisation organique d'une surface.

14. Utilisation d'un procédé selon la revendication 1, pour la fabrication d'une biopuce ou d'un capteur.

15. Utilisation d'un procédé selon la revendication 1 pour réaliser une couche isolante ou une couche barrière dans un microsystème.

16. Utilisation d'un procédé selon la revendication 1 pour réaliser une couche isolante ou une couche barrière en microélectronique.

## Claims

1. Method for cladding a simple or complex surface, electrically conducting or semiconducting, by means of an organic film from at least one precursor of said organic film, **characterised in that** the cladding of the surface by the organic film is carried out by electro-initiated grafting of said, at least one, precursor of said surface by applying on this surface at least one potential sweep carried out in such a way that at any point of said surface the maximum potential of each potential sweep, in absolute value and relative to a reference electrode, is greater than or equal to the value of the potential (V_{bloc}) from which the curves of a graph expressing the quantity of electro-grafted precursor on a surface identical to said surface in function of the number of potential sweeps are all superposed and independent of this V_{bloc} potential.

2. Method according to claim 1, wherein the organic film is an organic polymer film and the precursor is an electro-active monomer precursor of said organic polymer film.

3. Method according to claim 2, wherein the monomer precursor of the organic polymer is a vinyl monomer or a mixture of vinyl monomers.

4. Method according to claim 2, wherein the, at least one, monomer precursor of the organic polymer being a vinyl monomer, it is chosen in the group consisting in vinyl monomers such as acrylonitrile, methacrylonitrile, methyl methacrylate, ethyl methacrylate, butyl methacrylate, propyl methacrylate, hydroxyethyl methacrylate, hydroxypropyl methacrylate, glycidyl methacrylate, the acrylamides and in particular the amino-ethyl, propyl, butyl, pentyl and hexyl methacrylamides, the cyanoacrylates, di-methacrylate polyethylene glycol, acrylic acid, methacrylic acid, styrene, parachloro-styrene, N-vinyl pyrrolidone, 4-vinyl pyridine, the vinyl halides, acryloyl chloride, methacryloyl chloride, and their derivatives.

5. Method according to claim 2, wherein the electro-initiated polymerisation consists of electro-grafting of cyclic monomers cleavable by nucleophilic or electrophilic attack.

6. Method according to claim 2, wherein the electro-initiated polymerisation consists of electro-grafting of diazonium, sulfonium, phosphonium or iodonium salts.

7. Method according to claim 2, wherein the electro-initiated polymerisation is initiated by diazonium, sulfonium, phosphonium or iodonium salts, in the presence of radically polymerisable monomers such as vinyl monomers or cleavable cyclic molecules.

8. Method according to claim 1, wherein the precursor is a vinyl monomer coupled to a molecule or a macromolecule chosen in the group consisting in a polymer such as polyethylene glycol; a nitrogenous base or a derived nitrogenous base; an oligonucleotide; a peptide; a fatty acid; a carbohydrate; a polysaccharide, modified or not; cellulose and its derivatives and chitosan and its derivatives.

9. Method according to claim 2, wherein N potential sweeps are applied, N being a whole positive number, with 1 ≤ N ≤15.

10. Method according to claim 2, wherein the potential sweep is a voltammetric or multi-slot sweep.

11. Method according to claim 2, in which the precursor monomer being methacrylonitrile, V_{bloc} is from -2.3 to -2.5 V (Ag⁺/Ag).

12. Cladding obtained by the method according to claim 1.

13. Utilisation of a method according to claim 1, for the organic functionalisation of a surface.

14. Utilisation of a method according to claim 1, for the manufacture of a biochip or a sensor.

15. Utilisation of a method according to claim 1 for producing an insulating layer or a barrier layer in a micro-system.

16. Utilisation of a method according to claim 1 to produce an insulating layer or a barrier layer for microelectronics.

## Patentansprüche

1. Verfahren zum Überziehen einer einfachen oder komplexen, Strom leitenden oder halbleitenden Oberfläche mit einem organischen Film aus wenigstens einem Vorläufer dieses organischen Films, **dadurch gekennzeichnet, dass** das Überziehen der Oberfläche mit dem organischen Film durch elektrisch angeregte Pfropfung dieses wenigstens einen Vorläufers auf diese Oberfläche durch Anwendung wenigstens einer Potentialänderung auf dieser Oberfläche derart durchgeführt wird, dass das Potentialmaximum jeder Potentialänderung als Absolutwert und bezüglich einer Bezugselektrode an jedem Punkt dieser Oberfläche größer als oder gleich dem Wert des Potentials (V_{bloc}), ab dem sich die Kurven eines Graphs, der die Menge des auf eine Oberfläche elektrogepfropften Vorläufers, die mit der besagten Oberfläche identisch ist, als Funktion der Anzahl der Potentialänderungen ausdrückt, alle überlagern und von diesem Potential V_{bloc} unabhängig ist.

2. Verfahren gemäß Anspruch 1, bei dem der organische Film ein organischer Polymerfilm ist und der Vorläufer ein elektroaktives Vorläufermonomer dieses organischen Polymerfilms ist.

3. Verfahren gemäß Anspruch 2, bei dem das Vorläufermonomer des organischen Polymers ein Vinylmonomer oder ein Gemisch von Vinylmonomeren ist.

4. Verfahren gemäß Anspruch 2, bei dem das wenigstens eine Vorläufermonomer des organischen Polymers, das ein Vinylmonomer ist, aus der Gruppe ausgewählt ist, die sich aus Vinylmonomeren wie etwa Acrylnitril, Methacrylnitril, Methylmethacrylat, Ethylmethacrylat, Butylmethacrylat, Propylmethacrylat, Hydroxyethylmethacrylat, Hydroxypropylmethacrylat, Glycidylmethacrylat, Acrylamiden und insbesondere Aminoethyl-, Propyl-, Butyl-, Pentyl- und Hexylmethacrylamiden, Cyanacrylaten, Polyethylenglykoldimethacrylat, Acrylsäure, Methacrylsäure, Styrol, p-Chlorstyrol, N-Vinylpyrrolidon, 4-Vinylpyridin, Vinylhalogeniden, Acryloylchlorid, Methacryloylchlorid und ihren Derivaten zusammensetzt.

5. Verfahren gemäß Anspruch 2, bei dem die elektrisch angeregte Polymerisation aus einer Elektropfropfung durch nukleophilen oder elektrophilen Angriff spaltbarer, cyclischer Monomeren besteht.

6. Verfahren gemäß Anspruch 2, bei dem die elektrisch angeregte Polymerisation aus einer Elektropfropfung von Diazonium-, Sulfonium-, Phosphonium- oder lodoniumsalzen besteht.

7. Verfahren gemäß Anspruch 2, bei dem die elektrisch angeregte Polymerisation durch Diazonium-, Sulfonium-, Phosphonium- oder Iodoniumsalze in Gegenwart radikalisch polymerisierbarer Monomeren wie etwa Vinylmonomeren oder spaltbarer cyclischer Moleküle gestartet wird.

8. Verfahren gemäß Anspruch 1, bei dem der Vorläufer ein Vinylmonomer ist, das an ein Molekül oder ein Makromolekül gekoppelt ist, das aus der sich aus einem Polymer wie Polyethylenglykol, einer Stickstoffbase oder einem Derivat einer Stickstoffbase, einem Oligonukleotid, einem Peptid, einer Fettsäure, einem Glucid, einem unmodifizierten oder modifizierten Polysaccharid, Cellulose und ihren Derivaten und Chitosan und seinen Derivaten zusammensetzenden Gruppe ausgewählt ist.

9. Verfahren gemäß Anspruch 2, bei dem N Potentialänderungen angewendet werden, wobei N eine positive ganze Zahl mit 1 ≤ N ≤ 15 ist.

10. Verfahren gemäß Anspruch 2, bei dem die Potentialänderung eine voltammetrische oder mehrrechteckige Potentialänderung ist.

11. Verfahren gemäß Anspruch 2, bei dem das Vorläufermonomer Methacrylnitril ist und Vbloc -2,3 bis -2,5 V (Ag⁺/Ag) ist.

12. Überzug erhalten durch das Verfahren von Anspruch 1.

13. Anwendung eines Verfahrens gemäß Anspruch 1 zur organischen Funktionalisierung einer Oberfläche.

14. Anwendung eines Verfahrens gemäß Anspruch 1 zur Herstellung eines Biochips oder eines Sensors.

15. Anwendung eines Verfahrens gemäß Anspruch 1 zum Erzeugen einer Isolierschicht oder einer Sperrschicht in einem Mikrosystem.

16. Anwendung eines Verfahrens gemäß Anspruch 1 zum Erzeugen einer Isolierschicht oder einer Sperrschicht für die Mikroelektronik.
